# EUROPEAN PATENT APPLICATION

(11) **EP 1 061 516 A1**
(43) Date of publication of application: **20.12.2000**
(21) Application number: 99201816.8
(22) Date of filing: 08.06.1999
(51) Int. Cl.: G11B 20/00, G06F 1/00

(54) **Method for play back of an encrypted piece of information recorded on an information carrier and play back apparatus for use within said method**

(71) Applicant: DEUTSCHE THOMSON-BRANDT GMBH, 78048 Villingen-Schwenningen (DE)
(72) Inventor: HÜTTER Ingo, 30982 Pattensen (DE)
(74) Representative: Schäferjohann, Volker Willi

(57) **Abstract**

The invention is related to the play back of encrypted information like a video film stored on an optical disc, e.g. DVD. While from the US market so called DIVX DVD players are known with which DIVX DVD can be played back, under the drawback of having the need to provide a modem in the DVD player and to connect the DVD player permanently with a telephone line the invention proposes a simplified method. This method includes the following steps:
- generation of a play back request code (30) in a conditional access unit (23) on demand of a user;
- display of the play back request code (30);
- establishing a connection to a play back access service provider;
- transferring said play back request code (30) to the play back access service provider on demand of said user;
- receiving a play back permission code from the play back access service provider;
- forwarding the play back permission code to the conditional access unit (23) on demand of the user;
- checking the play back permission code in the conditional access unit (23),
- only in case of verification of the play back permission code starting decrypting and play back of said piece of information.

The invention further concerns an play back apparatus for use within the method.

## Description

The invention relates to a method for play back of an encrypted piece of information recorded on an information carrier and a play back apparatus for use within said method.

### Background

Since last year there are DVD players on the US market which are also able to play back so called DIVX discs where DIVX is standing for a company which sells special DVD discs containing scrambled data. Playing back these discs is possible only if the player contains a DIVX descrambler. Such a DVDplayer is also available from THOMSON multimedia under the brand name RCA with type number RC5230Z. The DIVX descrambler must be initialised in the right way. This is done by the player who establishes a modem connection with the DIVX center which transmits the authorization code for playing back the disc to the DVD player.

DIVX discs are much cheaper then regular discs (their price is about $5), and they can be played back (as often as wanted) for two days after having been inserted in the player for the first time. If the disc shall be played back later again, paying of an additional fee is necessary (paid via credit card after a new modem connection with the DIVX center has been established). It is also possible to change the status of the disc in such a way, that it can be played back forever, but the fee for this change is higher.

This system was introduced for the US market only. When considering a similar system in Europe, the different habits and wishes of the customers in Europe should be beared in mind.

In view of this, the DIVX system has some disadvantages which are:
- The player is only able to play back DIVX discs if its modem is connected with a telephone plug. (Typically the telephone plug is far away from the TV set!)
- The user must tell its credit card number to the provider.
- The provider sometimes tries to contact the player (via modem), even if no DIVX disc was inserted.
- A special battery buffered memory is necessary, which is used to store the protocols of all DIVX disc accesses.

### Invention

It is an object of the present invention to disclose a modified method for play back of scrambled information pieces which avoids above listed disadvantages. The object is solved with the measures claimed in claim 1. According to claim 1 the inventive method includes the steps of:
- Generation of a play back request code on demand of the user in a conditional access unit;
- display of the play back request code;
- establishing a connection to a play back access service provider;
- transferring said play back request code to the play back access service provider on demand of the user;
- receiving back a play back permission code from the play back access service provider;
- forwarding the play back permission code to the conditional access unit on demand of the user;
- checking the play back permission code in the conditional access unit;
- in case of verification of the play back permission code starting decrypting and play back of said piece of information and;
- in case of non verification denying decrypting and play back of said piece of information.

Advantageously, additional embodiments of the inventive method are disclosed in the respective dependent claims. More specifically, the basic idea of the invention is that the authorisation code for play back is received by telephone (in verbal communication) from a call center and the user enters the received code in the play back apparatus by himself (see claims 3 to 5). The fees for the authorisation are paid via the telephone company, so they are part of the bill of the telephone company.

This method has the advantages of being simple to realize (so its cheaper to implement also for the customers) and it is more adapted to the mentality of the European customers.

It is a further advantage that the play back request code consists of at least two parts, an identification number for the information carrier and a random number generated within the conditional access unit of the play back apparatus (see claim 2). With this measure the different accesses to a single information carrier can be easily recognised by the play back access service provider.

For verifying the play back permission code in the play back apparatus it is necessary to make a transformation of the play back request code into a reference code and to compare the reference code with the play back permission code (see claim 6). From the cryptology there are some cryptographic algorithm known which serve for a transformation of a first code into a second code however, the inverse transformation being impossible, i.e. its impossible to find out the first code when the second code is known only. These kind of algorithms are known in cryptology under the name "trapdoor" algorithm.

For making the access to the scrambled information more save, the play back request code can be extended by an extra part stored on the information carrier which is kept confidential, i.e. it is not displayed to the user. Of course the play back access service provider must have knowledge of this part, too for calculating the play back permission code (see claim 7). The information stored in the extra part, could be one or more further random number (see claim 8).

In order to avoid errors during the communication process it is advantageous to protect the play back request and permission codes with an additional error detection code (see claim 9).

When the information carrier is an optical disc, in particular DVD, it is an advantageously embodiment to store the identification number and the extra part of the play back request code in the burst cutting area of the optical disc (see claim 10). This is a secure disc area which cannot be read by most DVD ROM players.

For further improving access security it is a good alternative to store the extra part of the play back request code in a secure section of the optical disc where a dedicated error correction method is used (see claim 11). This has the advantage that when this section is read from a conventional DVD player or DVD ROM player, a read error will result and there is the further need to find out the error correction algorithm for unauthorised persons trying to get access to the information free of charge.

The invention consists further in an apparatus for use within the method for play back of a scrambled piece of information. Such an apparatus has included a play back drive, a conditional access unit, a decrypting unit and a user interface.

The apparatus is characterised in that it includes further a playback request code generating means which generates the play back request code after insertion of an information carrier and which brings this play back request code to display, and a transformation unit in which the play back request code is transformed to a reference code according to a cryptographic algorithm after receiving a play back permission code via said user interface and wherein the apparatus further includes a comparing means for comparing the reference code with the play back permission code and which initiates decrypting and play back of the information stored on the information carrier if the reference code and the play back permission code correspond to each other. In case they are different access for decrypting and play back is denied.

Advantageously, additional embodiments of the inventive apparatus are disclosed in the respective dependent claims 12 to 14.

### Drawings

Exemplary embodiments of the invention are illustrated in the drawings and are explained in more detail in the following description.

In the figures:

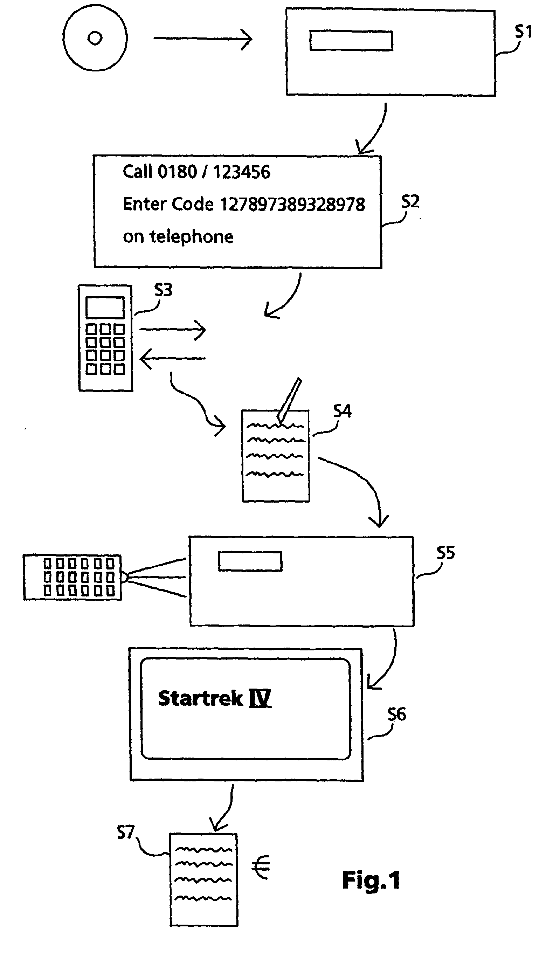

- Fig. 1: shows a flow chart of the method according to the invention;
- Fig. 2: shows an information flow diagram for the method according to the invention;
- Fig. 3: shows a block diagram for the play back apparatus according to the invention;
- Fig. 4: shows the structure of the play back request code according to the invention; and
- Fig. 5: shows a flow chart for conditional access unit in the play back apparatus.

### Exemplary embodiments

The invention is now explained on the example of a DVD player where the scrambled piece of information (e.g. a video film) is stored on a DVD (digital versatile disc). In step S1 the user inserts the scrambled DVD in the DVD player. The DVD player reads the individual disc serial number from the burst cutting area (BCA) of the disc. The conditional access unit of the DVD player generates a random number as will be explained later on.

In step S2 the resulting play back request code is displayed together with a telephone number for the play back access service provider. The display is preferably the connected TV screen but could also be a separate display on the DVD player itself.

In step S3 the user establishes the connection to the play back access service provider by typing the displayed telephone number on his telephone. He also enters the displayed play back request code upon request.

In step S4 the user receives the play back permission code from the call center of the play back access service provider.

In step S5 the user enters the received play back permission code in the DVD player e.g. by typing the code on the remote control of the DVD player.

After verification of the play back permission code in the DVD player the DVD player starts decrypting play back of the selected video film in step S6.

Together with the telephone bill the user receives the bill for the video film play back afterwards from the telephone company in step S7.

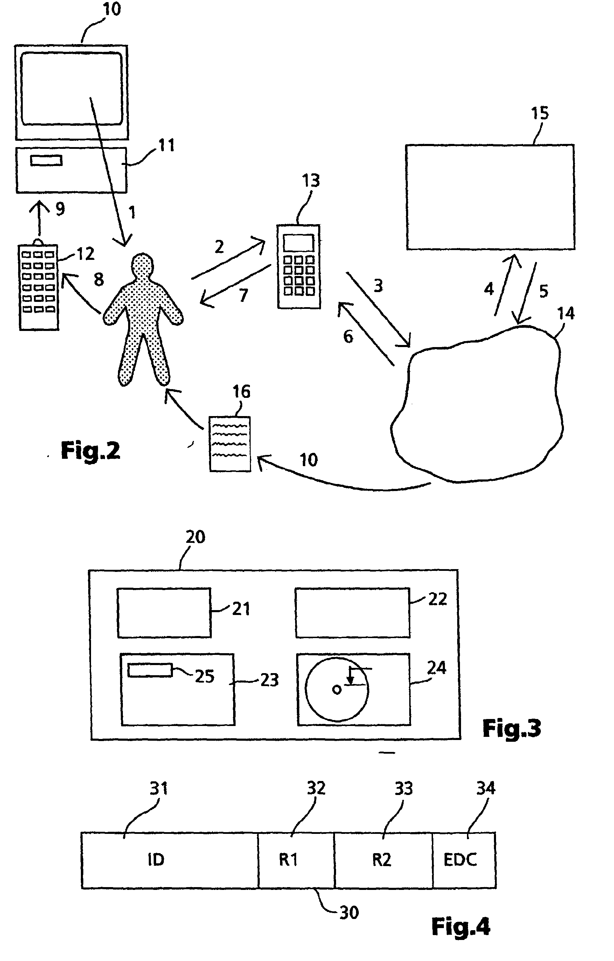

The information flow of this service is depicted in Fig. 2. Reference number 10 denotes a TV screen. Reference number 11 denotes the DVD player. The remote contoller of the DVD player has reference number 12. A telephone of the user has reference number 13. The service provider has reference number 15 and the telecommunication company which guides the telephone call to the service provider has reference number 14. The telephone bill is denoted with reference number 16. Information flow is indicated by arrows and corresponding numbers in Fig. 2.

The technique for the installation of call centers is existing and well known to the skilled persons working in this field. Today, there are known call centers working fully automatically 24 hours a day with computer voice, etc. However, also a conventional call center with telephone operators could be used, here. Of course a service provider considering to install such a call center must have a contract with the telecommunication company which guarantees that the information received from the user is kept anonymous. From telecomunication companies like the Deutsche Telekom it is well known that they offer specific service numbers like the 0180... numbers for renting. A lot of companies rent one or more of these numbers for their telephone service lines or hot lines. Each customer has to pay the same amount of money when using such a service number regardless from where he makes his telephone call. Often there is a fixed price for one call under these numbers regardless how long this call takes. A certain amount of money the user has to pay for the service goes to the telecommunication company while the rest goes to the service provider. The customer pays for the service via the telephone bill. Today, the charging of service calls is so variable that a service provider can define for each call under a given number how much money this call should cost the customer and the telecommunication company will prepare the bill accordingly. There is an International Standardisation Group working on this matter. The existing versions of the standard have the number ITU Q12XX.

In the following the play back apparatus is described more detailed in connection with Fig. 3. The whole apparatus is denoted with reference number 20. Reference number 21 denotes a decrypting unit. With reference number 22 a user interface is denoted and with reference number 23 a conditional access unit is denoted. A random number generator 25 is also depicted separately in conditional acces unit 23. A DVD drive has the reference number 24. In this unit also the video and audio decoding part and the video signal generation part is included which makes the block diagram much more easier to understand.

The decrypting unit 21 can be of any known type for digital video data encryption like the triple DES system used for the DIVX DVDs for the US market, where DES stands for data encryption standard.

The user interface 22 consists of a conventional OSD controller and a receiver for remote control signals. All messages on the display for the dialogue with the user are generated in this unit.

The play back request code 30 used for this invention is exemplarily shown in Fig. 4. It consists of four parts. The first part is the disc identification number ID in field 31. The second part is a first random number R1 in field 32 the third part is a second random number R2 in field 33 and the last part is an error detection code EDC in field 34. This kind of error protection code could also be added to the play back permission code.

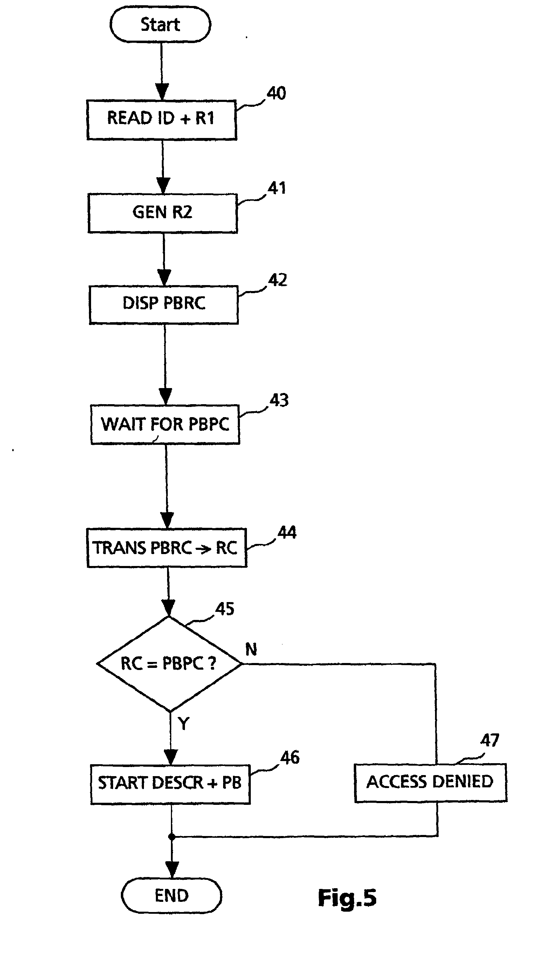

The conditional access unit 23 works as shown in the flow chart of Fig. 5. After insertion of a scrambled DVD the conditional access unit starts its operation. In step 40 the CA unit 23 controls the DVD drive 24 so that it reads disc identification number ID and first random number R1 from the BC area of the disc. In step 41 the random number generator 25 generates a second random number R2.

In step 42 the play back request code is displayed to the user. However, it is a specific feature in this embodiment that the first random number R1 is hidden on the display. Of course it must not be shown to the user that there is one part missing in the play back request code. Note, that the missing random number R1 is also not entered on the telephone when communicating with the call center of the play back access service provider. Thus the service provider needs to have a table, where the random numbers R1 are listed for each disc according to the disc identification number ID. There do exist cryptographic algorithms which are capable of transforming a first code into a second code in a predetermined manner but it is impossible to find out the first code when the resulting second code is known only. The algorithms are known in cryptology under the name trapdoor function. An example for such an algorithm is the method according to which the operating system UNIX makes an encryption of the passwords. A similar method can be used here for transformation of the play back request code into play back permission code in the call center.

In the next step 43 the conditional access unit 23 waits for the input of the play back permission code. When this code has been entered the conditional access unit 23 makes a test of the received play back permission code. For this test it takes the full play back request code inclusive all three parts and makes the same transformation as the call center has done. The result is a reference code which is compared with the play back permission code in step 45. In case both numbers are different, the access to the scrambled information is denied and a corresponding message is displayed to the user in step 47. In case both numbers are identical, the conditional access unit gives respective control commands to the decrypting unit 21 and disc drive 24 so that decrypting and play back of the selected video film is started in step 46.

In an alternative embodiment the first random number R1 is not stored in the BC area of the disc, but it is stored in a section of a disc where a specific error correction method is used, different from the error correction method used in other sections of the disc. This error correction method is not known to conventional DVD players or DVD ROM players. Therefore, it is not possible to read the encrypted data with a conventional player because it would respond with a read error. For such a solution reference is made to the International Patent Application WO 98/33105.

In general the random number R1 could consist of a number of different parts which could be located in different areas of the disc e.g. the two different areas mentioned in the paragraph above.

## Claims

1. Method for play back of an encrypted piece of information recorded on an information carrier having included the steps of:
- generating of a play back request code (30) in a conditional access unit (23) on demand of a user;
- displaying of the play back request code (30);
- establishing a connection to a play back access service provider;
- transferring said play back request code (30) to the play back access service provider on demand of said user;
- receiving a play back permission code from the play back access service provider;
- forwarding the play back permission code to the conditional access unit (23) on demand of the user;
- verifying the play back permission code in the conditional access unit (23),
- starting decrypting and play back of said piece of information in case of verification of the play back permission code.

2. Method according to claim 1, wherein the play back request code (30) consists of at least two parts, one part being the identification number (ID) of the information carrier and the other part being a random number (R2) generated in the conditional access unit (23).

3. Method according to claim 1 or 2, wherein the connection to a play back access service provider is established by user activity, namely by selecting a specific telephone number on a separate telephone (13).

4. Method according to claim 3 wherein the play back request code (30) is transferred to the play back access service provider via telephone connection line after the user has entered the play back request code (30) on his telephone (13).

5. Method according to one of claims 1-4, wherein the play back permission code is transferred to the user also via telephone connection and the user enters the received permission code in the play back device (20).

6. Method according to one of claims 1-5, wherein for chekking the play back permission code the play back request code (30) is transformed into a reference code according to a cryptographic algorithm and the reference code is compared with said play back permission code and wherein the play back permission code is positively verified when reference code and play back permission code are identical.

7. Method according to claim 6, wherein for checking the play back permission code the play back request code (30) is extended by an extra part (R1) being read from the information carrier which is kept concealed from the user,said extra part being also available at the play back access service provider for calculating the play back permission code.

8. Method according to claim 7, wherein the extra part (R1) consists of one or more further random numbers.

9. Method according to one of claims 1 - 8, wherein the play back request code (30) or the play back permission code are extended by an error detection code for error recognition purposes.

10. Method according to one of claims 7 to 9, wherein the information carrier is an optical disc, in particular a DVD, and wherein the identification number (ID) and the extra part (Rl) is stored in the burst cutting area of the optical disc.

11. Method according to claim 7, wherein a first error correction algorithm is used for recorded data on the disc in a number of first sections and a second error correction algorithm is used for recorded data on the disc in one or more second sections of the disc and wherein the extra part (R1) of the play back request code (30) is stored in one of said second sections of the disc.

12. Apparatus (20) for use within a play back method according to one of claims 1-11, said apparatus having a play back drive (24) for play back of information stored on an information carrier a conditional access unit (23), a decrypting unit (21) and a user interface (22), **characterized in that**, said apparatus includes a play back request code generating means, which generates said play back request code (30) after insertion of an information carrier and brings this play back request code to display (10), wherein said apparatus further includes a transformation unit (44) in which the play back request code (30) is transformed to a reference code according to a cryptographic algorithm after receiving a play back permission code via said user interface (22) and wherein said apparatus further includes a comparing means (45) for comparing said reference code with said play back permission code which initiates decrypting and play back of the information stored on said information carrier if reference code and play back permission code are identical and which denies play back and decrypting otherwise.
